Europäisches Patentamt

European Patent Office

Office européen des brevets

(11) Publication number: **0 397 604**

**A2**

(12) **EUROPEAN PATENT APPLICATION**

(21) Application number: **90830045.2**

(22) Date of filing: **06.02.90**

(51) Int. Cl.⁵: **B29D 11/00**

(30) Priority: **11.05.89 IT 2045889**

(43) Date of publication of application:
**14.11.90 Bulletin 90/46**

(84) Designated Contracting States:
**AT DE ES FR GB**

(71) Applicant: **INTERCAST EUROPE S.P.A.**
**Via Natta, 10/A**
**I-43100 Parma(IT)**

(72) Inventor: **Baiocchi, Paolo, Intercast Europe**
**S.p.A.**
**Via Natta, 10/A**
**I-43100 Parma(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) **Method for making thermosetting plastic material high mechanical strength eyepieces.**

(57) There is disclosed a method for making thermosetting plastic material high mechanical strength eyepieces,comprising the steps of forming the eyepieces in a glass mold at a temperature from 40 to 80˚ C, starting from polyallyl diglycole carbonate and copolymers thereof with allyl,acryl and vinyl monomers,and cutting the formed eyepieces in the form of lenses, masks,visors,screens and the like,by means of a laser beam.

The method further comprises the step of forming, by a laser beam,cuts,holes,slots and the like in the eyepiece body.

EP 0 397 604 A2

## BACKGROUND OF THE INVENTION

The present invention relates to a method for making thermosetting plastic material high mechanical strength eyepieces.

As is known,with the coming of very reduced weight plastic materials,having a great resistance against scratches and impacts,tempered glass for optical and face protection applications has been progressively replaced by said materials.

One of this plastic materials which has very good characteristics for the above mentioned applications, is a polymer based on allyl diglycole carbonate,which is commercially known,for example,by the name of CR39 of the PPG Company;RAV 7 of the Enichem Company; Nouryset 200 of the AKZO Company,and so on.

This polymer substantially comprises a highly transparent or clear thermosetting resin the mechanical properties of which arc intermediate between those of a brittle material and those of a ductile material.

This resin,the specific gravity of which is about a half than that of glass is moreover provided with a good resistance against scratches;thus it is particular ly suitable for making eyeglass lenses,since this material must not be processed by complex anti-scratch processes.

According to the prior art,the allyl diglycol carbonate,either individually or with allyl,vinyl and acryl monomers,with the addition of peroxide catalyzers, is usually cured or cross-linked in a glass mold,under a temperature cycle from 40 to 80° C,so as to provide a very transparent product having an optically polished surface.

These products are advantageously used for making lenses,visors and protecting screens,which are shaped by means of mills,grinding wheels or saws, depending on the desired configuration.

However,as the above mentioned articles of manufacture are fitted by force to their supporting frames,they are susceptible to be easily fractured, which is typical of the above mentioned thermosetting materials.

These fractures,in particular,occur because of complex flexure,compression and twisting phenomena, which affect the weakest portion of these articles, such as the nose piece of the eyeglasses,cuts,holes and the like of protective masks and screens.

To the foregoing it is to be added that, even if the above mentioned materials have an impact resistance which is greater than that of glass,it is however frequently insufficient to resits against possible great impacts on the eyeglasses or masks.

Also known is the fact that the mechanical strenght characteristics of these materials usually also depend on the conditions of the surfaces of the articles.

In particular,these surfaces must be fully devoid of fractures,micro-cracks,scratches and the like, in order to provide satisfactory results.

In this connection it should be pointed out that while eyepieces made of polyallyl diglycole carbonate have perfectly smooth and polished surfaces,in particular those formed in contact with the glass molds, they have scarcely finished edge portions,which are usually made by cutting operations by means of mills, grinding wheels,saws or other abrasive systems.

In fact a microscope examination of these edges,or side surfaces,shows a presence of microcracks the amount and size of which depend on the used cutting system and on the status of the used cutting tools.

The prescnce of these microcracks,in particular, is the main factor affecting the breaking of known polyallyl diglycole carbonate eyeglasses.

In fact it has been found that under flexure, twisting or impact stresses,the breaking starts from an edge and/or from the weakest points,for example mechanically damaged points.

## SUMMARY OF THE INVENTION

Thus,the aim of the present invention is to overcome the above mentioned drawbacks,by providing eyepieces made of a thermosetting plastic materials, based on polyallyl diglycole carbonate,which are devoid of any microcracks,in particular edge microcracks.

Within the scope of the above aim,a main object of the present invention is to provide an eyepiece making method suitable to provide eyepieces having the above mentioned perimetrical finishing characteristics.

Another object of the present invention is to provide such an eyepiece making method which can use thinner and lighter starting materials.

According to one aspect of the present invention, the above aim and objects,as well as yet other objects, which will become more apparent hereinafter,are achieved by a method for making eyepieces of polyallyl diglycole carbonate and copolymers thereof,with allyl, acryl and vinyl monomers,formed in a glass mold under a temperature cycle from 40 to 80° C,characterized in that said method comprises the step of cutting said eyepieces to desired size and shapes by means of a laser beam.

In fact it has been found from experiments that,by cutting by a laser beam the mentioned eyepieces, they show a mechanical strength much greater than that of like pieces cut and shaped by conventional means.

The laser beam is also used,according to the invention, to form in the body of the eyepiece cuts, holes,slots and the like;also in this case it has been found that there are actually absent any brittleness problems,since the piece contours appear as perfectly continuous and homogeneous.

In particular,under microscope examination, it has been found that the edge microcracks are fully absent,and the edges appear as welded,which is considered due to a melting of the edge regions.

During the cutting steps,along the eyepiece edge there are formed semi-solid cracking products which,after few hours,are absorbed again.

The thus made eyepieces will be able of resisting against twisting,bending and compression stresses,even with great levels of applied forces, thereby these eyepieces can be constructed of a thinner material.

In this connection it should be pointed out that,with respect to the impact resistance,the presence of microcracks represents only one of the causes which may originate weak spots in the material; another factor to be considered being the thickness of the piece,the resiliency of the material and the test temperature.

On the other hand,it has been experimentally found that eyepieces cut by a laser beam satisfy all of the International resistance standards,both in the optical field and in the industrial protection field (ANSI,DIN,BS,CEN,ISO) even if they are made with thicknesses less than those which are usually necessary as they are cut by conventional methods.

Thus, it will be possible to use in the solar field eyepieces cut by a laser beam the thickness of which varies from 0.5 to 1.2 mm,while a conventional thickness for like applications would be from 1.4 to 2.0 mm.

Likewise,in the industrial protection field it is possible to use eyepieces having a thickness from 1.4 to 2.0 mm,instead of 3.0 mm as usually required.

For a better understanding of the main physical characteristics of the eyepieces made by the method according to the present invention, there are hereinbelow given some not limitative examples of the subject eyepieces as well as of related resistance tests.

EXAMPLE 1

From a plate of an allyl diglycole carbonate polymer : methyl methacrylate (90:10) of 1mm thick there are formed eyepieces by using a $CO_2$ laser beam cutting device with a power of 40 W and a speed of 2m/sec.These pieces have been hot bent to a spherical form and subjected to the impact resistance test according to ANSI Z80.3,with a steel ball of 16.1 g, caused to drop from a height of 1.27m.Of 80 tested pieces none presented microcracks with detachement of material.

From the same plate conventionally shaped lenses have been obtained which have been subjected to the same impact test.Of 80 tested pieces, 35 were broken and 30 had a lot of microcracks.

EXAMPLE 2

From a plate of allyl diglycol carbonate copolymer : methyl methacrylate (90:10) of 2.0 mm thick eyepieces were formed by means of the laser beam cut of Example 1 (power 80 Watt) and by a conventional saw cut.

An impact resistance test has been carried out according to the standard DIN 4646 sheet 3 with a steel ball of 41 g falling from a height of 130 mm.On 50 pieces of 100 x100 mm cut by the laser beam only 2 pieces had microcracks without any material loss.

Of 50 like pieces cut by the saw, 26 were broken into several parts.

EXAMPLE 3

The same eyepieces of the Example 1 cut by the laser beam were subjected to a breakage static test (Bs 2724-1987) under a load of 10 Kg for 10 sec,without showing any microcracks. 50% of the eyepieces of the Example 1 which were conventionally shaped did not pass this test.

From the above disclosure it should be apparent that the invention fully achieves the intended objects.

**Claims**

1- A method for making eyepieces made of polyallyl diglycole carbonate and copolymers thereof with allyl,acryl and vinyl monomers,said eyepieces being formed in a glass mold under a temperature cycle from 40 to 80° C,characterized in that said method comprises the step of cutting to shape said eyepieces by means of a laser beam.

2- A method according to claim 1,characterized in that it comprises the step of forming in the bodies of said eyepieces holes,slots,cuts,notches by using a laser beam.

3- Eyepieces made of polyallyl diglycole carbonate and copolymers thereof with allyl,acryl and vinyl monomers made by a method according to claim 1, characterized in that said eyepieces are devoid of edge microcracks visible under a microscope with a X 40 magnification.

4- Eyepieces according to claim 3,characterized in that said eyepieces are provided with holes,slots,cuts and notches the edges of which are devoid of any microcracks visible under a microscope at a X 40 magnification.